(19) Europäisches Patentamt
European Patent Office
Office européen des brevets

(11) **EP 2 458 774 A1**

(12) **EUROPEAN PATENT APPLICATION**

(43) Date of publication:
**30.05.2012 Bulletin 2012/22**

(51) Int Cl.:
**H04L 9/06** (2006.01)

(21) Application number: **10192457.9**

(22) Date of filing: **24.11.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nagravision S.A.**
**1033 Cheseaux-sur-Lausanne (CH)**

(72) Inventor: **Wyseur, Brecht**
**1305, Penthalaz (CH)**

(74) Representative: **Leman Consulting S.A.**
**Chemin de Précossy 31**
**1260 Nyon (CH)**

(54) **A method of processing a cryptographic function in obfuscated form**

(57) The present invention concerns the field of White Box Cryptography, in particular techniques for implementing block ciphers in software, such that they are able to mitigate white-box attacks. It is proposed a method of processing a cryptographic function (F) in obfuscated form of an input text (T) and a key (K) to produce an output text (Y), said method comprising the steps of :

a. concatenating the input text (T) and the key (K) to obtain an intermediate state array,

b. executing a linear transformation (L) mapping its input to its output, said linear transformation updating the intermediate state array,

c. modifying the intermediate state array by executing a non-linear substitution function (S),

d. re-executing the steps b and c a predetermined number of time,

e. modifying the intermediate state array by executing a linear transformation (L) mapping an input to and output,

f. modifying the intermediate state array by executing a non-linear substitution function (S),

g. executing a linear transformation on the intermediate state array that maps the intermediate state array to an output state array, to produce at least the output text.

Fig. 5

| | | | | | |
|---|---|---|---|---|---|
| $x_1$ | $x_2$ | $x_3$ | $x_4$ | $\cdots$ | $x_n$ |

Input state array x

Non-linear layer S

| | | | | | |
|---|---|---|---|---|---|
| $y_1$ | $y_2$ | $y_3$ | $y_4$ | $\cdots$ | $y_n$ |

Output state array y

## Description

### Introduction

The present invention concerns the field of White Box Cryptography, in particular techniques for implementing block ciphers in software, such that they are able to mitigate white-box attacks. These are attacks where an adversary has full access to the software implementation (the compiled binary), and its execution environment.

We present a pre-compiler - the techniques we will present are source-to-source transformations - that is able to interpret the description of a cryptographic functions (specifically, a block cipher) and produces a new representation that includes the desired security properties. This transformed representation can then be compiled using a generic compiler (such as GCC); the resulting binary be deployed in a white-box context.

### Background art

The context of the technique we present is the protection of cryptographic keys for CAS and DRM systems. Keys in these systems are processed on client machines, and need to be protected both at storage as at usage time.

### Generic Key Ladder in CAS/DRM

The focus of this document is towards secure software implementations of Key Ladder systems for Conditional Access Systems and Digital Rights Management. That is, we discuss key-based access control, not rights-based access control. The difference between the two is the following:

- in a rights-based CAS, access decisions are based on a description of the privileges of an individual or group on content. This often involves a formal language in which these rights are described, and a rights management engine that is able to process this description along with an identification of the individual/group, and make a decision if a certain action is granted or not;

- in a key-based CAS, access decisions are based upon the availability of cryptographic keys that enable a client to decrypt content.

Indeed, on open platforms such as we consider, it makes sense to focus on key-based systems. Rights-based systems are hard to secure in software, since this would involve complex protection techniques to prevent modification of the rights description, the authentication of the individual/group, and ensure correct execution of the rights management engine. In a key-based system, it would mainly be the confidentiality of cryptographic keys that needs to be ensured.

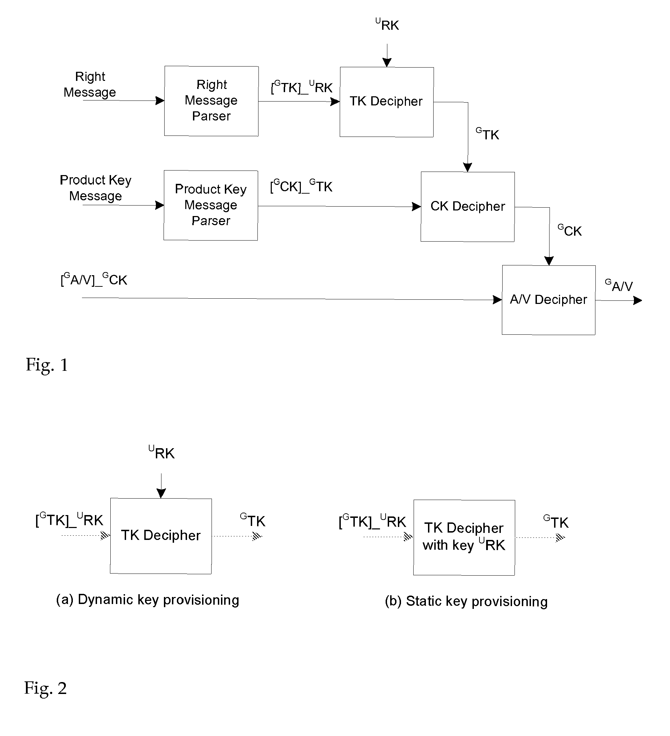

A key-based system usually deploys a key-ladder to process cryptographic keys that eventually lead to a content key (CK). In Figure 1, we present a universal view on a key-based key ladder for CAS and DRM.

Most related prior art patents relate to white-box implementations. However, some techniques (such as blinding) which relate to side-channel mitigate techniques are deployed here as well.

All white-box implementations that have been presented so far comprise of a network of lookup tables. They do not include linear layers. Secondly, the invention we present is the first white-box implementation that can be used for dynamic encryption/decryption.

In the document US 7'397'916 it is described how to protect software from a "white-box attack", where the attacker has total visibility into software implementation and execution. In general, this is done by encoding the software and widely diffusing sites of information transfer and/or combination and/or loss. Other embodiments of the invention include: the introduction of lossy subcomponents, processing inputs and outputs with random cryptographic functions, and representing algorithmic steps or components as tables, which permits encoding to be represented with arbitrary nonlinear bijections.

This document also describes how to implement a block cipher - in particular, the Data Encryption Standard (DES) - as a randomized network of lookup tables. The entire implementation comprises of lookup tables, where these tables embedded the cryptographic key. Hence, this relates to fixed key implementations.

In the document US 2010/0080395 it is described a cryptographic method implemented in a white-box implementation. The method comprises applying a plurality of transformations, each replacing an input word by an output word, applying a diffusion operator to a concatenation of a plurality of output words for diffusing information represented by the output words among the output words. A key to the cryptographic method comprises information representing the diffusion operator. The diffusion operator satisfies a property that a change of one bit in an input to the diffusion operation corresponds to a change of more than one bit in an output of the diffusion operator. This document describes a white-box implementation with key-dependent S-boxes. It comprises the implementation of the AES along the methods described by Cloakware™, but then where also the S-box is seen as a key.

**Brief description of the invention**

The aim of the present invention is achieved thanks to a method of processing a cryptographic function (F) in obfuscated form of an input text (T) and a key (K) to produce an output text (Y), said method comprising the steps of :

a. concatenating the input text (T) and the key (K) to obtain an intermediate state array having an input array size,

b. executing a linear transformation (L) mapping its input to its output, said output having a size equal or greater than the size of the input, said linear transformation updating the intermediate state array,

c. modifying the intermediate state array by executing a non-linear substitution function (S), wherein each input byte of the intermediate state array is replaced by an output byte according to a lookup table, the size of the intermediate state array being left unchanged,

d. re-executing the steps b and c a predetermined number of time,

e. modifying the intermediate state array by executing a linear transformation (L) mapping an input to and output, said output having a size equal or greater than the size of the input,

f. modifying the intermediate state array by executing a non-linear substitution function (S), wherein each input byte of the intermediate state array is replaced by an output byte according to a lookup table, the size of the intermediate state array being left unchanged,

g. executing a linear transformation on the intermediate state array that maps the intermediate state array to an output state array, the size of the output state array being equal or greater than the size of the input text, to produce at least the output text.

**Brief description of the figures**

The present invention will be better understood thanks to the attached figures in which :

Figure 1 illustrates a universal view of a key-based key ladder for CAS and DRM.

Figure 2 describes a static and dynamic key provisioning

Figure 3 illustrates a formal statement of the problem to address.

Figure 4 illustrates the generator

Figure 5 illustrates the case of non-linear layer S

Figure 6 illustrates the case of linear layer L

Figure 7 illustrates a generic overview of transforming an SPN cipher into a joint structure

Figure 8 illustrates a conceptual overview of including an input decoding

Figure 9 illustrates an additive blinding

Figure 10 illustrates a multiplicative blinding

Figure 11 illustrates an application of a wide linear randomization

Figure 12 illustrates the case of including intermediate state data in the output

Figure 13 illustrates an LSL structure, extended with random input/output

Figure 14 illustrates a rolled LSL structure

Figure 15 illustrates an AES key schedule round

Figure 16 illustrates an AES inverse key schedule round

Figure 17 illustrates an overview of one AES round with on-demand key schedule

Figure 18 illustrates the compilation of the AES into an LSL structure

**Detailed description**

In this universal view, the audiovisual content (A/V) is encrypted using a standardized cryptographic (symmetric) algorithm - such as the Advanced Encryption Standard (AES) in CBC mode - using a content key (CK) which is global. Keys and data that are global are depicted using a $^G$; in contrast to user-specific keys that are depicted using a $^u$. In any broadcast setting, content is encrypted using a global key; otherwise a different stream needs to be sent for every different key.

The content key is provided to the user, encapsulated in a 'Product Key Message', and is over encrypted using a global Transmission Key TK. Finally, this transmission key is provided to a user in a 'Rights Message', which is encrypted specifically for every user.

This captures the term of Positive Addressing (PA), where users are able to decrypt content when they posses the corresponding keys. This is commonly deployed in many CAS and DRM systems. In Table 1, we present an overview of three families of CAS/DRM systems. The basic DVB-CSA CAS, which is the common CAS system, is presented in the first column; the second column the NMP-Live; the NMP-VoD is represented in the last column. The techniques that we develop in this document are mainly intended for the latter one, but naturally extend to any kind of key-based CAS/DRM system.

## Table 1 - Overview of keys in different DRM/CAS types

| | | CAS family | | DRM family |
|---|---|---|---|---|
| | CAS/DRM Type | A key based CAS system over DVB-CSA | A key based CAS over IP (IP-CAS) | PRM (Nagravision DRM) |
| Messages | Right Message | EMM | | DMM data structure |
| | Product Key Message | ECM | | DCM data structure |
| Keys | $^G$CK | Control Word CW. Changes every crypto- | Content Key CK. Can stay constant for | Content Key CK. Constant for one product. |

|  |  |  |  |  |
|---|---|---|---|---|
|  |  | period. | one product access control |  |
|  | $^G$TK | Transmission key TK |  |  |
|  | $^U$RK | Unique key permitting to control the access right by providing $[^G\text{TK}]\_^U\text{RK}$ only to authorized targets. |  |  |
| Deciphering algorithms | A/V Decipher | DVB-CSA algorithm | AES-CBC | AES-CBC |
|  | CK Decipher | Proprietary. Commonly TDES, AES-ECB, AES-CBC, IDEA... |  |  |
|  | TK Decipher | Proprietary. Commonly TDES, AES-ECB, AES-CBC, IDEA... |  |  |

**Dynamic versus Static Key Provisioning**

An essential concept in a key-based system is dynamic key provisioning, which we illustrate in Figure 2(a). This is a building block that can be instantiated with a cryptographic key (or a representation thereof) at run time. This in contrast to a static key provisioning system (Figure 2(b)), which is a fixed key cryptographic instance.

As is clear from Figure 1, a dynamic key provisioning system is a necessary building block to enable a key ladder system for CAS and DRM. This is required for both A/V deciphering as for CK deciphering since these deciphering algorithms are only provisioned with their cryptographic keys at run time. Since for one client, the root key is changed only exceptionally (it is provisioned at the initialization phase), a fixed-key implementation can be deployed. However, often practical constraints (such as the difficulty to individualize code at customer level) make that we prefer dynamic key provisioning for the whole key ladder.

Remarkably, when we study the state of the art of secure software implementations of cryptographic primitives (often denoted as white-box cryptography), only static key implementations have been described. In such implementations the key is hard-coded into the implementation and can only be updated by replacing binary code. We intend to fill this gap: we present a method to implement a dynamic block cipher operation with increased resilience against software attacks. However, we acknowledge the disadvantage of dynamic key provisioning systems to fixed-key provisioning systems from both a security point of view as a size/performance point of view.

**Context**

Our objective is to implement the key ladder of the CAS for NMP in software. The key ladder as depicted in Figure 1 is implemented in the application that will be deployed at client side. This means that this software implementation will be executed on a platform that resides at the client's premises and (in the case of NMP) where this execution platform is under control of the client.

Such a context is denoted as a White-Box Attack Context (WBAC) **Error! Reference source not found.**, which assumes that

-   fully privileged attack software shares a host with the cryptographic software that is deployed, having complete access to the implementation of these algorithms;

-   the dynamic execution (including the processing of the cryptographic keys, or instantiated cryptographic key in the case of a fixed-key provisioning system) can be observed; and

-   all internal details of the cryptographic implementation are both completely visible and alterable at will.

The attack tools that are at the disposal of the adversary are diverse. They include analysis of the memory at execution time and analysis of the implementation binary; interception of calls to the CPU or external libraries; replacing external libraries; the use of debugging and analysis tools such as IDA Pro; reverse engineering of the code, tampering of the binary implementation, fault injection at execution time, rewriting and replacing parts of the applications, etc. We refer to Main and van Oorschot **Error! Reference source not found.** for an overview of software attack tools.

The design and implementation of cryptographic primitives that are designed to withstand white-box attacks is captured by the term White-Box Cryptography (WBC). When white-box cryptography is applied to existing block ciphers - such as the Advanced Encryption Standard (AES) and the Data Encryption Standard (DES) - it comprises of dedicated source-to-source transformations. Without these transformations, standard implementations of these primitives are an easy target since they may just read-out secret key information from the memory **Error! Reference source not found.** or observe operations with secret key data at execution time.

**Problem statement**

**Objective**

In a white-box attack context, the adversary is able to analyze (and tamper with) the components of the key ladder and the connection between these components. Therefore, our objective to mitigate white-box attacks is threefold:

- Exposure of the secret key of the cryptographic decryption operations must be prevented at execution time. This requires us to implement this cryptographic building block in such a way that no useful information is leaking at execution time.

- Secondly, the dataflow between the different components of the key ladder must be protected, since this dataflow - the output of a decryption operation - is used at the input of the proceeding component as a cryptographic key that instantiates the next decryption operation.

- Thirdly, code lifting must be prevented. That is: the adversary can interpret the protected implementation (together with the associated representation of the cryptographic key) as a (big) key. Therefore, it must be prevented that the adversary can use a component of the key ladder out of its intended context.

**Formal description**

We address these objectives by implementing the key ladder, depicted in Figure 1, as a composition of encoded
We address these objectives as follows:

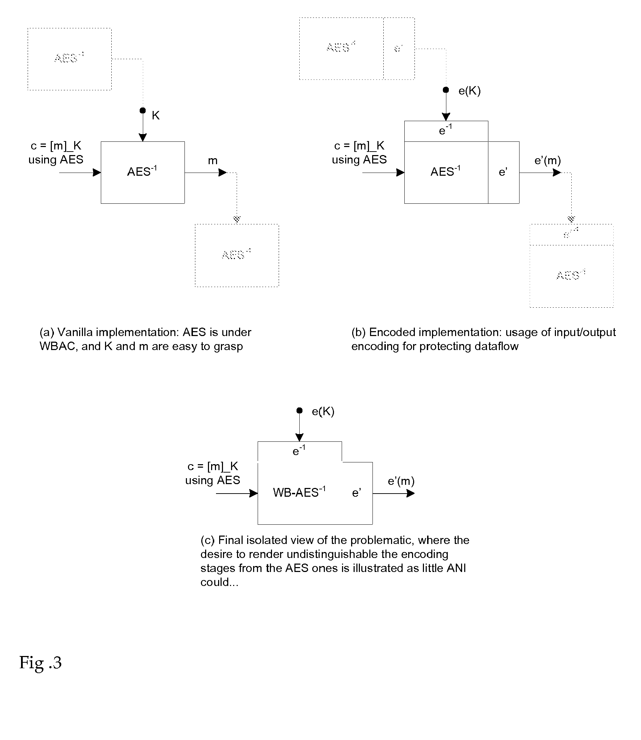

1. We implement the key ladder as the composition of encoded decryption operations instead of the original, vanilla decryption operations. This is illustrated in Figure 3, for the example where the key ladder is composed of AES decryption operations. Figure 3(a) represents the original key ladder as in Figure 1, while Figure 3(b) represents an encoded key ladder.

While in the vanilla case, the decryption operations are implemented as

$$m = AES^{-1}[c, K].$$

They will be implemented as

$$e'(m) = AES^{-1}[c, e(K)]$$

in the encoded key ladder. The operations e' and e represent the encodings that are applied; their goal is to garble the values of m and K respectively, thus hiding the dataflow between the building blocks of the key ladder. These encodings are applied as such in the key ladder that the output encoding of one component, is annihilated by its corresponding annihilating input encoding of the proceeding component (which we often refer to as a decoding).
As long as these encodings remain secret, cannot be extracted from the implementation, and provide sufficient diffusion, they protect the dataflow. This is also a method to prevent code lifting, since an encoded decryption operation is useless without its annihilating decoding. Hence, the implementation of one encoded decryption operation cannot be used outside of the context of the key ladder. Moreover, if for each instantiation of a key ladder, different encodings are used (e.g., the software implementation for each client is compiled with a different set of encodings), then encoded decryption implementations cannot be code lifted from one client implementation, and used in the key ladder of another client key ladder implementation since the encodings will not match.

We harden the software implementation: we implement the components of the encoded key ladder in such a way that the encodings cannot be extracted from the implementation, and such that no critical information (such as cryptographic keys) is exposed at execution time.

**Generator**

In this section, we present how an implementation as depicted in Figure 3(c) can be created. For this, we will use a generator, which has a role as pre-compiler.

**Description**

The generator is a process that is able to generate code of the building blocks described in Section "Formal description". We denote the code of these building blocks as 'client code'. Additionally, the generator can also create additional code or specifications (both captured by the term 'server code').

The generator will be executed on a trustworthy offline system, while the client code can be compiled into executable code that can be deployed on untrustworthy computing platforms; these are the building blocks of the key ladder. Hence, the generator serves as a pre-compiler.

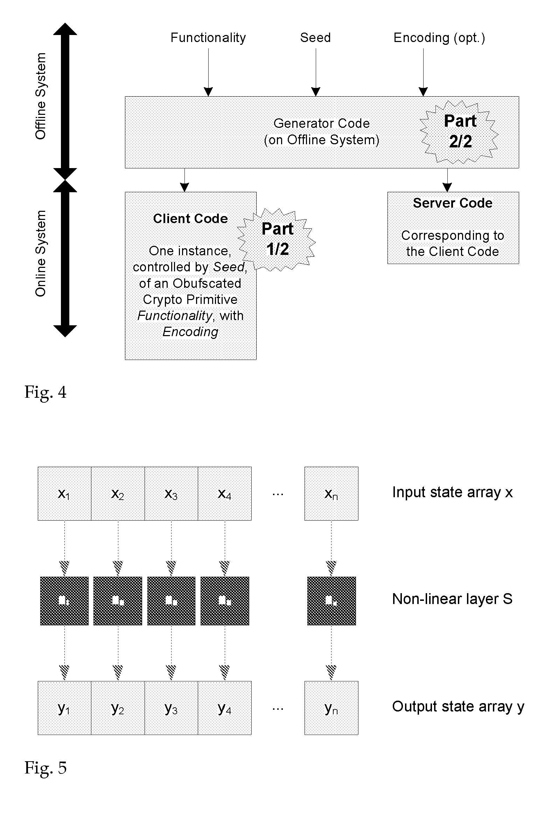

Figure 4 depicts the functional overview of the generator. The input to the generator is

- a specification of the cryptographic functionality that needs to be generated - usually this is the description of a block cipher (such as the AES), added with optional operations;

- a byte array that serves as a seed for the pseudo random number generator that will be used throughout the generation process; and

- optionally, a description of the encodings (e and e' as depicted in Figure 3) that need to be integrated in the functionality of the generated client code.

To generate a complete key ladder - which comprises of three decryption stages - the generator will need to be executed three times; each time creating the code for one of the stages. To ensure that the key ladder remains functionally equivalent, while the dataflow is randomized (due to the use of encodings), information of the encodings needs to be shared between each of these generation processes. This is where the use of server code (at the output) and encodings as an input come into play.

Internally, the generator will comprise of three main stages:

1. preparation of the functionality as a fixed, predefined structure,

2. if desired (according the configuration of the generator), inclusion of the input and/or output encodings; when not supplied, these encodings will be generated first, and

3. obfuscating the software implementation through a process of software transformation and randomization techniques. These randomization techniques are controlled by the seed.

We shall explain each of these stages in the sections below.

**Preparing the implementation**

The first stage of the generator is to express the cryptographic primitive that has been specified as a sequence of layers that operate on an intermediate state array. The sequence alternates between two types of layers:

A non-linear substitution layer (S) which replace each input of the intermediate state array by an output according to a lookup table. Hence, the operation comprises of a layer of parallel lookup tables (often called S-boxes or Substitution boxes) $S_1, S_2, ... , S_n$, as depicted in Figure 5. The intermediate input state array is depicted as $x = (x_1, x_2, ..., x_n)$; the output state array as $y = (y_1, y_2, ... , y_n)$; the functionality is defined as $y_i = S_i(x_i)$. During this step, the size of the intermediate state array being left unchanged.

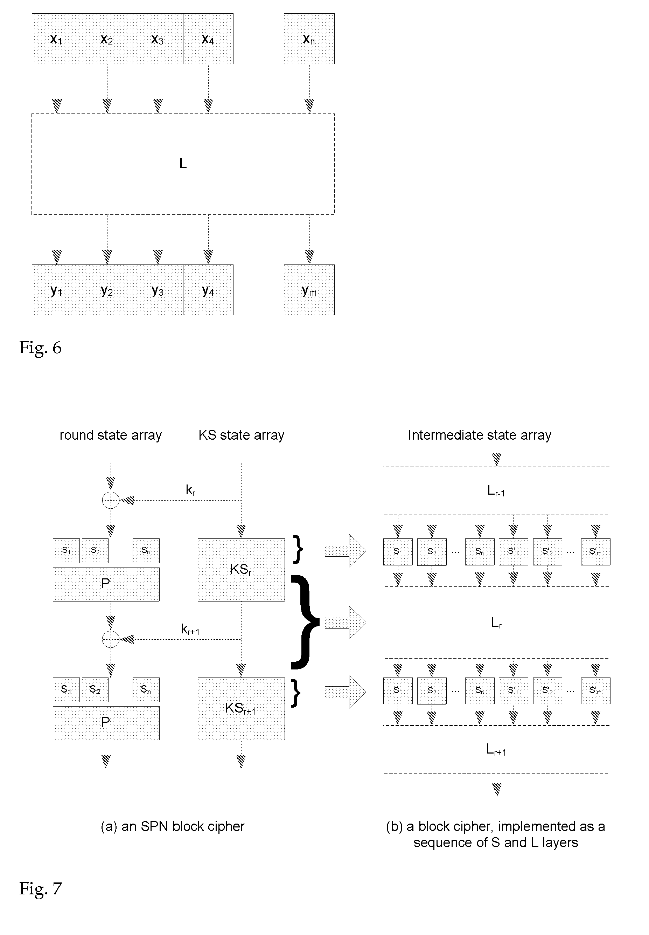

A linear layer (L), which is a transformation that maps the intermediate input state array onto an intermediate output state array. The mapping is a linear operation, and can hence be expressed as a system of polynomials of degree 1. Figure 6 depicts the layer L, where $x = (x_1, x_2, ... , x_n)$ is the intermediate input state array, $y = (y_1, y_2, ..., y_m)$ the intermediate output state array. Note that the input and output state array can have an equal or of greater size. Any output variable $y_i$ can be expressed with a multivariate polynomial $L_i$ of maximum degree 1 over the input variables:

$$y_i = L_i(x_1, x_2, ..., x_n).$$

Note that the precise definition of S and L may differ for each round. Hence, we can define them as $S_r$ and $L_r$, where the index r refers to the round number. For sake of simplicity, we often discard the index where it is clear from the context.

Any cryptographic primitive whose round operations and key scheduling comprises of lookup tables and linear operations, can be expressed in this way. This is the case for the most popular family of block ciphers - SPN block ciphers (Substitution Permutation Networks) - which includes the Advanced Encryption Standard (AES) and the Data Encryption Standard (DES).

The main purpose of this step is to merge the block cipher's round operation and key schedule operation. This is crucial in our approach, since we will need to make it difficult for an adversary to distinguish intermediate variables that relate to the round operation, from intermediate variables that relate to the key schedule operation.

This transformation is specific to the cryptographic functionality that is provided. It is a matter of aligning all the lookup tables of both the round operation and the key schedule of one single round, and modifying the linear operations accordingly. This may involve that 'fake' lookup tables need to be introduced, and that some state arrays need to be extended (e.g., for the AES, the key schedule intermediate state array needs to be extended from 16 to 20 bytes, such that its S-boxes can be aligned with the S-boxes of the round operation).

Figure 7 presents a generic overview of this transformation, where on the left hand side, a generic SPN block cipher is depicted, while on the right hand side its corresponding expression in terms of a sequence of alternating S and L layers. $KS_r$ represents the key schedule for round r, with $k_r$ the round key. The lookup tables that originate from the key schedule operation (including the fake ones that might need to be introduced) are depicted as $S'_i$.

**Including input and/or output encodings**

The second phase of the generation process comprises of the addition of input and/or output encodings, if specified by the configuration settings.

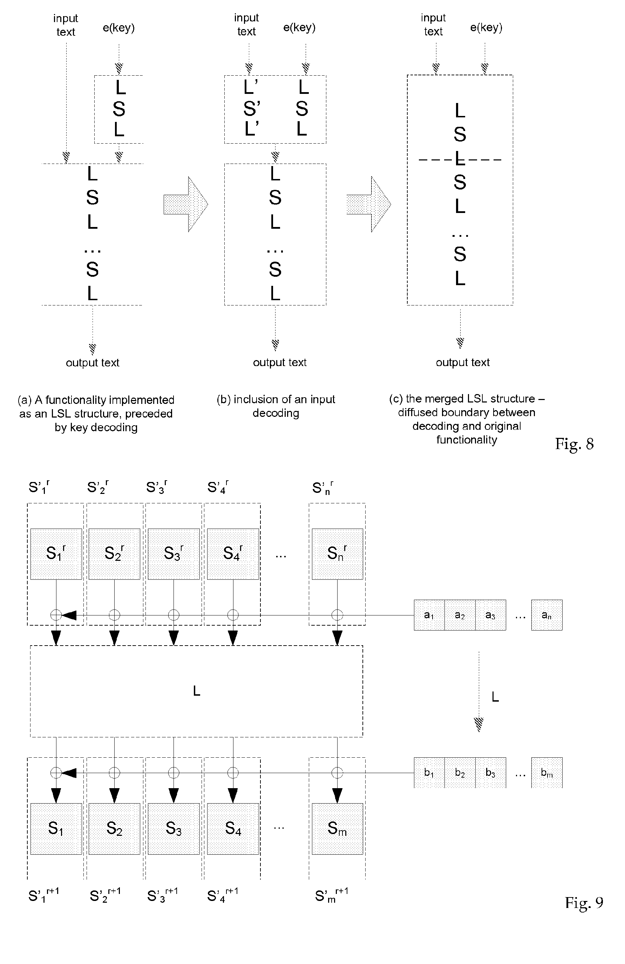

This is illustrated in Figure 8, where a decoding at the entry of the key is integrated in the code structure. The aim is to produce an implementation that is able to process an encoded key and have the decoding phase as much as possible integrated into the implementation, thus disguising the border between the output of the decoding and the input to the actual functionality.

To achieve this, it is required that the decoding functionality has a similar structure as the code structure of the main functionality; i.e., it comprises of a sequence of layers, alternating between L and S layers. An encoding that comprises of 3 layers is depicted in Figure 8. Conceptually, to integrate the key decoding, the decoding layer is first extended horizontally such that it also processes the input text, but does not change the overall functional behavior between (input text, e(key)) and (output text). Although this does not provide any security against analysis, it enables the deployment of randomization techniques (as described in Sect. 0) such that the mixing of the input text and key information can take place as soon as possible and the randomization techniques apply as wide as possible.

As a result, the key itself is never exposed in the clear in the phase between the decoding and the main functionality. Instead, a 'mixed' representation is stored.

Note that the same approach as depicted in Figure 8 can be applied to include a decoding of the input text, and/or an encoding of the output text.

The main idea is to provide a toolbox that is able to manipulate 'LSL structures': to extend such structures by including similar LSL structures at any input and/or output.

**Hardening**

The final step of the generation process comprises of software hardening techniques. We apply a number of techniques that make it more difficult for an adversary to reverse engineer the functionality of the resulting code. After the application of these source-to-source code transformation techniques, the result is functionally (semantically) equivalent, while it is syntactically very different; i.e., the implementation will consists of different, seemingly randomized operations which operate on intermediate state array that seem to contain random data at execution data.

The aim is to make it more difficult for an adversary to distinguish the dataflow that relates to the original round operations from the dataflow that relates to the key schedule operations, and to extract useful information such as the secret key that is used while executing the code.

In this section, we present a few of the software transformation techniques that can be deployed. They are randomization techniques, which will retrieve the random information (such as blinding factors or a random order) from a pseudo random number generator (PRNG) that is fed by the seed that is provided to our generator.

An example PRNG is the AES in counter mode where the initial counter and key are derived from the 32 bytes seed that is provided.

### Additive blinding

Figure 9 depicts a first randomization technique: additive blinding. This is conceptually similar to techniques deployed against side channel attacks: include a fixed, randomly generated number to a component where it can be include, and undo this addition at another place in the implementation. As a result, the dataflow between these two places is shifted with this random value, which may destroy mathematical relations that might otherwise be present in the implementation and be a means to initiate an attack.

In the LSL structure, a random blinding value can be including at the output of each S-box (except for the final layer of S-boxes). This is depicted with the values $a_i$ in Figure 9. This operation can be annihilated at the input of the proceeding layer of S-boxes, with the evaluation of the values $a_i$ through the linear layer, which results into the $b_i$ values depicted in Figure 9.

### Multiplicative blinding

Similar to additive blinding, a multiplicative blinding factor can be included into the S-boxes. This can be annihilated by the proceeding linear layer - by adjusting the coefficients of the linear layer.

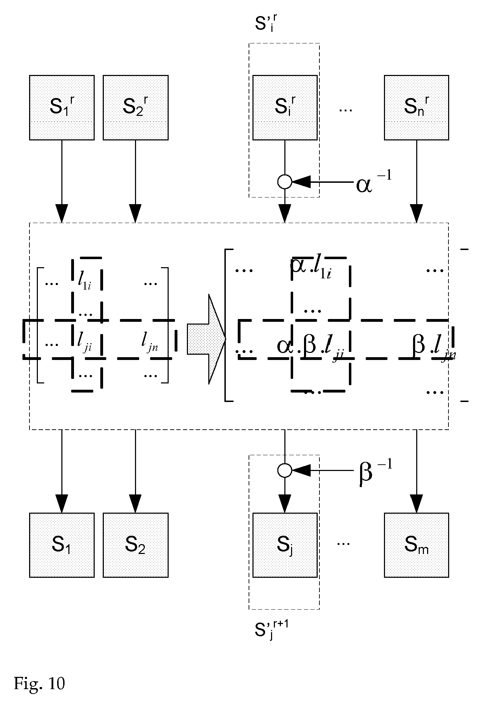

An example of the application of a multiplicative blinding factor is presented in Figure 10: two randomly generated values alpha and beta are used as blinding factors for respectively the output of the S-box i at round r, and S-box j at round r+1. These are annihilated by their inverse factors at the corresponding column i and the row j respectively in the matrix that represents the linear transformation between these two S layers.

### Shuffle of the order of S-boxes

For each S layer, the order of S-boxes can be shuffled at random. The overall functionality is retained by shuffling the rows and columns of the matrix that represents respectively the preceding and proceeding linear layer.

### Splitting S-boxes

To reduce the ability for adversaries to 'recognize' lookup tables, we can deploy a technique that splits S-boxes into a multiple of parallel S-boxes. More precisely, in block ciphers that comprise of predefined S-boxes - which is the case in the AES and DES - an adversary could attempt to search for its affine equivalences.

That is, given the randomization techniques in Sect. 0 and Sect. 0, and adversary could attempt to retrieve the definition of the blinding factors from the obfuscated S-box S', since he might assume this S-box S' is the affine equivalence of a known S-box S:

S'=AoSoB

Where A and B are the affine randomizations, defined by the additive and multiplicative blinding factors.

This can be partly mitigated by splitting an S-box into several parallel S-boxes, for example

$S \rightarrow L_2 \text{ o } (S_1 \,||\, S_2) \text{ o } L_1$,

Where $||$ denotes the concatenation operation, $L_1$ maps x onto $(x \,||\, x)$ and $L_2$ is mapping $(x_1 \,||\, x_2)$ onto $x_1 + x_2$. The addition symbol + represents the exclusive addition (XOR). Then, the LHS is functionally equivalent to the RHS, if $S_2(x) = S_1(x) + S(x)$, for any definition of $S_1$. This naturally extends to many definitions of $L_1$ and $L_2$, and the case of multiple $S_i$'s.

### Wide linear randomizations

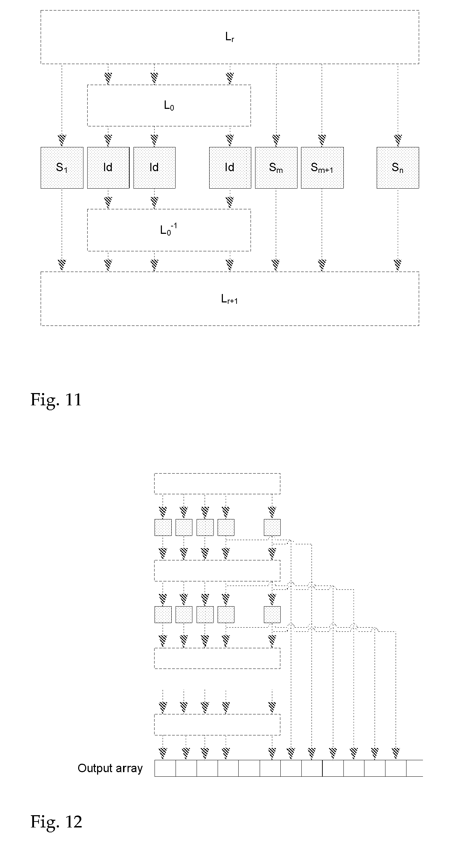

When linear S-boxes are present, wide linear randomizations can be deployed. Such S-boxes can be present due to the introduction of 'dummy' S-boxes, or from the process where S-boxes are split into an $S_1$ and $S_2$, where one of these S-boxes is linear. Figure 11 depicts the application of a wide linear randomization. For sake of simplicity, we assume that the linear S-boxes are identity functions (mapping x onto x); the other S-boxes are non-linear and depicted as $S_i$. The inputs to these linear S-boxes can be mixed by a randomly generated (non-lossy) linear mapping $L_0$, while

this mixing is annihilated with the inverse linear mapping $L_0^{-1}$ at the output of the S-boxes. Finally, the linear mappings $L_r$ and $L_0$ are to be merged; their result is a single representation that is used for the updated L layer.

The term 'wide' refers to the fact that these randomizations exceed the boundaries of the S-box input/output size. They introduce a degree of freedom that will diffuse a multiple of variables of the intermediate state array, and in particular make it more difficult to analyze the linear layers and recognize relations between different S-boxes of the original cipher.

To keep the overall size of the implementation within certain bounds and reduce the performance loss, once can use sparse random matrices as wide linear randomizations, instead of fully random matrices. Hence, the overall system of equations that represent the linear layer will comprise of less terms.

## Extensions

### Output of intermediate data

Some cryptographic functionalities require that intermediate data is included in the output. This is for example the case with the AES key schedule function which generates 16 bytes of the round key array at every round.

To implement such a functionality in a LSL structure, one can either take the needed intermediate values along during the entire implementation. However, this may risk making the implementation too big, since the intermediate state array needs to include all the desired intermediate data, and thus randomize over all these values. Another option is to relax the definition of the LSL structures, and allow intermediate data to be included in the output.

### Introduce random operations and input/output

An LSL structure can be extended to include the processing of random input and/or produce random output and/or include random computations during its processing. Such input/output and processing are totally unrelated to the original cryptographic functionality, but are meant to make it harder for an adversary to analyze the implementation.

The input to a random S-box that has been introduced in the implementation can be derived from any set of variables of the intermediate state. Hence, the row of the preceding matrix that corresponds to this input can be chose at random.

### A rolled implementation

Existing white-box implementations are all unrolled implementations, since they are fixed key implementations and therefore their rounds all need to be syntactically different. However, in our case we do not have this restriction since we can deploy dynamic implementations which can have code structures that are repeated (before the randomization is applied).

Hence, we can choose to implement LSL structures that include loops. This way, the implementation size can be reduced significantly. However, this approach is also imposing restrictions on the randomization that can be deployed, since the annihilation of the randomization also need to be correct for the loops. This choice is a tradeoff between implementation size and security.

### Application to the Advance Encryption Standard

### Introduction to AES

The Advanced Encryption Standard (AES) is a block cipher that operates on a fixed block size of 128 bits, and a key size of 128, 192, or 256 bits. In this section, we focus on AES with a key size of 128 bites (AES-128). The strategy described below naturally extends to larger key sizes, as well as to the Rijndael block cipher, of which the AES is an instantiation of - the AES is Rijndael fixed to a 128 bit block size.

### Structure

The AES-128 is composed of 10 rounds; each round comprises of a sequence of operations that operate on the 16 bytes intermediate state array as follows:

- prior to the first round:

    i. AddRoundKey - an (exclusive bit-wise) addition of each byte of the state array with the corresponding byte from the round key byte state array

- 9 consecutive rounds:

  i. SubBytes - a substitution operation on the bytes of the state array: each byte is replaced into its evaluation by the AES S-box. This is a non-linear mapping over the Rijndael Galois filed, and is usually implemented as a lookup table of 256 bytes.

  ii. ShiftRows - a cyclic shift over groups of 4 bytes of the state array (the 'rows' of the state array when the 16 bytes are represented as a 4x4 matrix of bytes)

  iii. MixColumns - a linear diffusion operation over the 4 byte 'columns' of the state array. This can be defined as a multiplication of the MC matrix with the state array matrix, where

$$MC = \begin{bmatrix} 02 & 03 & 01 & 01 \\ 01 & 02 & 03 & 01 \\ 01 & 01 & 02 & 03 \\ 03 & 01 & 01 & 02 \end{bmatrix}.$$

  iv. AddRoundKey

- the final round:

  i. SubBytes

  ii. ShiftRows

  iii. AddRoundKey

## Key schedule

The AES involves 11 round keys during its operation; these are generated from the original key using the key schedule. Each round key in AES-128 is 16 bytes; the first round key is the same as the original key.

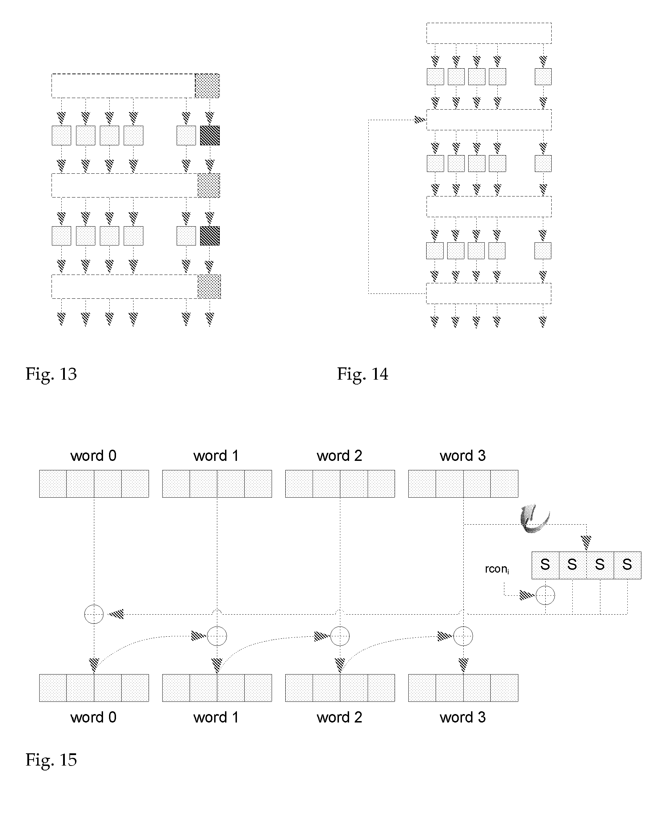

Figure 15 depicts one round of the key schedule, which has as input a 16 byte round key (expressed as four words) and outputs the 16 bytes of the next round key. The key schedule is a non-linear function, due to the presence of the four S-box operations. These are lookup table operations that use the same Rijndael S-boxes as used in the SubBytes operation. The $rcon_i$ is a round-dependent constant.

## Decryption

The decryption operation in AES-128 can be performed by executing the operations listed in Sect. 0 in reverse order, where the Rijndael S-boxes are replaced by their inverse and the inverse MixColumns operation MC$^{-1}$ is used, where

$$MC^{-1} = \begin{bmatrix} 14 & 11 & 13 & 09 \\ 09 & 14 & 11 & 13 \\ 13 & 09 & 14 & 11 \\ 11 & 13 & 09 & 14 \end{bmatrix}.$$

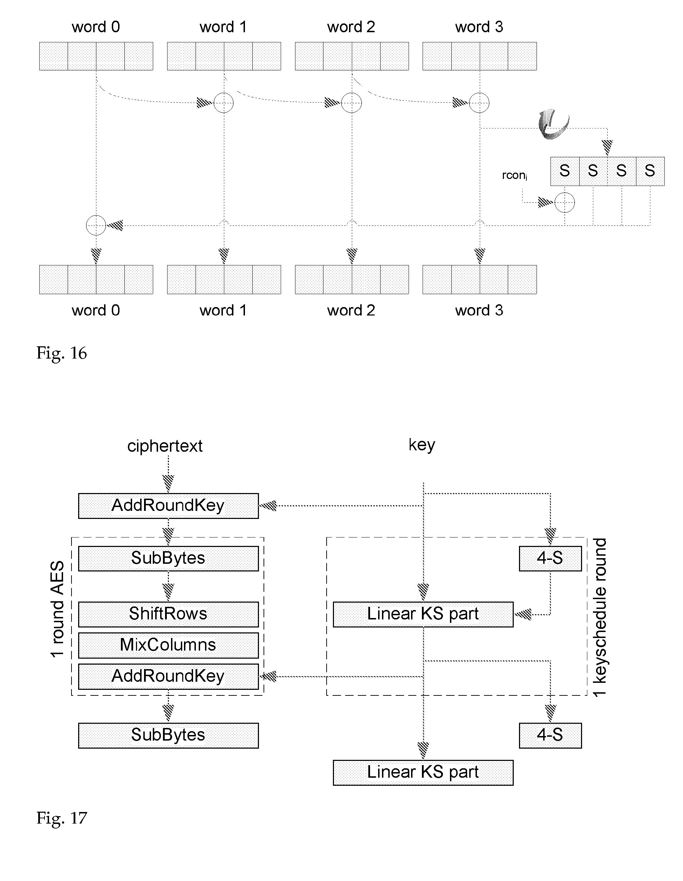

The round keys can be pre-computed using the normal key schedule. Another option - which needs to be used when AES-128 is implemented with integrated key schedule in decryption mode - is to implement an inverse key schedule, as depicted in Figure 16.

Note however that in this case, instead of the original key, the final round key needs to be provided. This is important, since it will affect the key generation for NMP at server side.

## Summary

Putting everything together, we can depict an AES round as in Figure 17.

This represents the case where the AES round keys are computed on-demand; i.e., they are computed while the round operations of the AES are processed. This is not the common practice. Usually, the key schedule is processed separately from the actual round computations, such that the work to compute the round keys needs to be performed only once.

In our case however, since we wish to hide the round keys, we 'glue' the key schedule computation and the AES round computations together, and make it as difficult as possible for an adversary to distinguish this boundary.

## Compiling the LSL structure

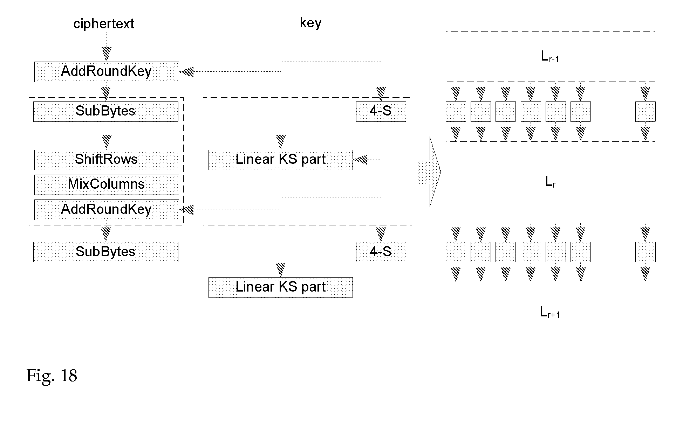

Figure 18 depicts the transformation of the AES with on-demand key schedule into an LSL structure. To achieve this, the non-linear operations of the AES round, and the key schedule need to be aligned, and identity S-boxes need to be introduced.

The result is an LSL structure, with round functions that operate on an intermediate state array of 36 bytes: 16 bytes that relate to the original AES rounds, 16 bytes that relate to the bytes that are input to the linear part of the key schedule, and 4 bytes that are input to the S-boxes of the key schedule. The initial input is 32 bytes - the concatenation of the cipher text with the key - the output is 16 bytes.

Next, the software hardening techniques that are described in Sect. 0 are applied. These will extend the intermediate state array, due to the splitting of S-boxes and the introduction of random S-boxes; and will mix the variables that relate to the key and the AES round operation. As a result, an adversary will be obstructed to extract information from this implementation at run-time.

## Claims

1. A method of processing a cryptographic function (F) in obfuscated form of an input text (T) and a key (K) to produce an output text (Y), said method comprising the steps of :

   a. concatenating the input text (T) and the key (K) to obtain an intermediate state array having an input array size,
   b. executing a linear transformation (L) mapping its input to its output, said output having a size equal or greater than the size of the input, said linear transformation updating the intermediate state array,
   c. modifying the intermediate state array by executing a non-linear substitution function (S), wherein each input byte of the intermediate state array is replaced by an output byte according to a lookup table, the size of the intermediate state array being left unchanged,
   d. Reexecuting the steps b and c a predetermined number of time,
   e. modifying the intermediate state array by executing a linear transformation (L) mapping an input to and output, said output having a size equal or greater than the size of the input,
   f. modifying the intermediate state array by executing a non-linear substitution function (S), wherein each input byte of the intermediate state array is replaced by an output byte according to a lookup table, the size of the intermediate state array being left unchanged,
   g. executing a linear transformation on the intermediate state array that maps the intermediate state array to an output state array, the size of the output state array being equal or greater than the size of the input text, to produce at least the output text.

2. Method of claim 1, **characterized in that** the cryptographic function is the Advanced Encryption Standard (AES), DES or 3DES.

3. Method of claim 1 or 2, wherein it comprises a step of adding random data to the input text or the key.

4. Method of claim 1, 2 or 3, wherein the input key (K) is provided in pre-encoded form in an input key array, where the pre-encoding is executed according to the steps b and c, this method comprising a pre-processing step of at least one time :

a. Executing an inverse linear transformation ($L^{-1}$) that map the input key array to an intermediate key array, the size of the intermediate key array being equal or greater than the size of the input key array,

b. Executing an inverse non-linear substitution step ($S^{-1}$) to obtain an output key array, wherein each input byte of the intermediate key array is replaced by an output byte according to a lookup table, the size of the output key array being equal to the size of the input key array.

5. Method of claim 4, where the output text Y is an encoded form of an original output text; said output text (Y) being represented by an output text array, this method comprising post-processing steps of at least one time :

- executing a linear transformation (L) mapping its input to its output, said output having a size equal or greater than the size of the input, said linear transformation updating the output text array,

- Modifying the output text array by executing a non-linear substitution step (S), wherein each input byte of the key array is replaced by an output byte according to a lookup table, the size of the output key array being equal to the size of the input key array.

6. Method of claim 4 or 5, wherein the input text X is provided in pre-encoded form, where the pre-encoding comprises of a sequence of alternating steps as describe in claim b and c, this method comprising pre-processing steps of at least one time :

c. Executing an inverse linear transformation ($L^{-1}$) that map the input text array on its output text array, the size of the intermediate text array being equal or greater than the size of the input text array,

d. Executing an inverse non-linear substitution step ($S^{-1}$), wherein each input byte of the text array is replaced by an output byte according to a lookup table, the size of the output text array being equal to the size of the input text array.

7. Method of any of the claims 1 to 6, wherein bytes from intermediate state array are also concatenated to the output state array.

$^U$RK

Right
Message → Right Message Parser → $[^G$TK$]\_^U$RK → TK Decipher

$^G$TK

Product Key Message → Product Key Message Parser → $[^G$CK$]\_^G$TK → CK Decipher

$^G$CK

$[^G$A/V$]\_^G$CK → A/V Decipher → $^G$A/V

Fig. 1

$^U$RK

$[^G$TK$]\_^U$RK → TK Decipher → $^G$TK

(a) Dynamic key provisioning

$[^G$TK$]\_^U$RK → TK Decipher with key $^U$RK → $^G$TK

(b) Static key provisioning

Fig. 2

(a) Vanilla implementation: AES is under WBAC, and K and m are easy to grasp

(b) Encoded implementation: usage of input/output encoding for protecting dataflow

(c) Final isolated view of the problematic, where the desire to render undistinguishable the encoding stages from the AES ones is illustrated as little ANI could...

Fig .3

Offline System

Online System

Functionality          Seed          Encoding (opt.)

Generator Code
(on Offline System)          **Part 2/2**

**Client Code**          **Part 1/2**

One instance,
controlled by *Seed*,
of an Obufscated
Crypto Primitive
*Functionality*, with
*Encoding*

**Server Code**

Corresponding to
the Client Code

Fig. 4

| $x_1$ | $x_2$ | $x_3$ | $x_4$ | ⋯ | $x_n$ | Input state array x |

Non-linear layer S

| $y_1$ | $y_2$ | $y_3$ | $y_4$ | ⋯ | $y_n$ | Output state array y |

Fig. 5

Fig. 6

(a) an SPN block cipher

(b) a block cipher, implemented as a sequence of S and L layers

Fig. 7

(a) A functionality implemented as an LSL structure, preceded by key decoding

(b) inclusion of an input decoding

(c) the merged LSL structure – diffused boundary between decoding and original functionality

Fig. 8

Fig. 9

Fig. 10

Fig. 11

Fig. 12

Fig. 13

Fig. 14

word 0          word 1          word 2          word 3

$rcon_i$

S   S   S   S

word 0          word 1          word 2          word 3

Fig. 15

word 0 word 1 word 2 word 3

rcon$_i$

S S S S

word 0 word 1 word 2 word 3

Fig. 16

ciphertext key

AddRoundKey

1 round AES

SubBytes

ShiftRows

MixColumns

AddRoundKey

SubBytes

4-S

Linear KS part

1 keyschedule round

4-S

Linear KS part

Fig. 17

ciphertext                    key

| AddRoundKey |

| SubBytes |

| ShiftRows |

| MixColumns |

| AddRoundKey |

| SubBytes |

| 4-S |

| Linear KS part |

| 4-S |

| Linear KS part |

$L_{r-1}$

$L_r$

$L_{r+1}$

Fig. 18

**EP 2 458 774 A1**

| Europäisches Patentamt European Patent Office Office européen des brevets | **EUROPEAN SEARCH REPORT** | Application Number EP 10 19 2457 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/140401 A1 (JOHNSON HAROLD J [CA] ET AL) 29 June 2006 (2006-06-29) | 1,2,4-7 | INV. H04L9/06 |
| Y | * pages 1,2,10-12,27; paragraph [0601] - paragraph [0604]; figures 9,10 * | 3 | |
| Y | WO 2008/119901 A2 (FRANCE TELECOM [FR]; BILLET OLIVIER [FR]; MACARIO-RAT GILLES [FR]) 9 October 2008 (2008-10-09) | 3 | |
| A | * pages 8-9; figure 2 * | 1,2,4-7 | |
| T | WO 02/46890 A2 (CLOAKWARE CORP [CA]; JOHNSON HAROLD J [CA]; CHOW STANLEY T [CA]; EISEN) 13 June 2002 (2002-06-13) * pages 26-30; figures 9,10 * | | |
| A | WO 2008/142612 A2 (KONINKL PHILIPS ELECTRONICS NV [NL]; GORISSEN PAULUS M H M A [NL]; MIC) 27 November 2008 (2008-11-27) * pages 6-13 * | 1-7 | |
| | | | TECHNICAL FIELDS SEARCHED (IPC) |
| | | | H04L |

The present search report has been drawn up for all claims

| Place of search | Date of completion of the search | Examiner |
|---|---|---|
| Munich | 25 May 2011 | Billet, Olivier |

EPO FORM 1503 03.82 (P04C01)

**ANNEX TO THE EUROPEAN SEARCH REPORT
ON EUROPEAN PATENT APPLICATION NO.**

EP 10 19 2457

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2011

| Patent document cited in search report | | | Publication date | Patent family member(s) | | | Publication date |
|---|---|---|---|---|---|---|---|
| US 2006140401 | A1 | | 29-06-2006 | NONE | | | |
| WO 2008119901 | A2 | | 09-10-2008 | NONE | | | |
| WO 0246890 | A2 | | 13-06-2002 | AU | 2141402 | A | 18-06-2002 |
| | | | | CA | 2327911 | A1 | 08-06-2002 |
| | | | | EP | 1350154 | A2 | 08-10-2003 |
| | | | | US | 2004139340 | A1 | 15-07-2004 |
| WO 2008142612 | A2 | | 27-11-2008 | CN | 101790865 | A | 28-07-2010 |
| | | | | EP | 2163029 | A2 | 17-03-2010 |
| | | | | JP | 2010528517 | T | 19-08-2010 |
| | | | | KR | 20100020481 | A | 22-02-2010 |
| | | | | US | 2010303231 | A1 | 02-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100080395 A